# EUROPEAN PATENT APPLICATION

(11) **EP 4 768 856 A1**
(43) Date of publication of application: **01.07.2026**
(21) Application number: 25157683.1
(22) Date of filing: 13.02.2025
(51) Int. Cl.: G01C 21/00, G06F 16/29, G06F 16/906

(54) **HANDLING POINT OF INTEREST (POI) INFORMATION FOR ELECTRONIC MAPS**

(30) Priority: 30.12.2024 US 202419005015
(71) Applicant: TomTom Global Content B.V., 1011 AC Amsterdam (NL)
(72) Inventor: Hildebrand, Kevin Robert Thomas, Knoxville, TN (US)
(74) Representative: Meier, Florian

(57) **Abstract**

An electronic map source (100) handles point of interest, POI, information for an electronic map (116). The electronic map source (100) acquires a plurality of POI data snippets, each POI data snippet including respective information about a respective POI. The electronic map source (100) calculates, using at least one weight function, a POI-POI weight score for each pair of POI data snippets from among the plurality of POI data snippets. The electronic map source (100) generates a POI score map including the pairs of POI data snippets arranged in a descending order of corresponding POI-POI weight scores. The electronic map source (100) clusters the POI data snippets into one or more POI clusters, the clustering including controlling which pairs of POI data snippets are clustered into POI clusters based on the order of the pairs of POI data snippets in the POI score map. The electronic map source (100) updates POI information in the electronic map data (116) based on information from the POI clusters.

## Description

### BACKGROUND

### Related Art

Electronic maps are digital versions of maps including information that can be used by electronic devices (e.g., smart phones, automated driving systems in vehicles, computers, etc.) for operations such as presenting map information to electronic map consumers (e.g., human users, software applications, autonomous driving systems, etc.), navigation route planning, and autonomous driving. Many electronic maps include information about points of interest (POI), which are elements in an electronic map that may be of interest to consumers of the electronic map. Points of interest can be used, referenced, or otherwise involved in/with many of the operations involving electronic maps. Depending on the particular electronic map and the nature of consumers of the electronic map, points of interest can be or include various elements in the electronic map. For example, one type of points of interest includes locations that may be of interest to an electronic map consumer, such as businesses, hospitals, restaurants, parks, sporting or entertainment venues, etc. As another example, another type of points of interest includes roadway features that can be used for operations such as providing navigation route guidance to users and/or autonomous driving systems (e.g., signs, interchanges, lane arrangements for lanes of road segments, etc.). Given the diverse types of points of interest and operations for which the points of interest are used, many electronic maps include a large number of points of interest.

In an effort to include more complete point of interest information in electronic maps, some electronic map sources acquire point of interest information from various outside sources. For example, electronic map sources may acquire point of interest information from sources such as point of interest data providers, financial institutions, professionally prepared articles or content on news websites, user reviews on review websites, etc. In many cases, information about the same points of interest can be acquired from multiple sources. In other words, information about a particular point of interest may be included in point of interest information acquired from several different sources of point of interest information. For example, multiple point of interest information sources may include point of interest information about a particular gas station, grocery store, or roadway element. Although each of the sources potentially provides useful point of interest information, simply including point of interest information from all sources into an electronic map can lead to duplication of point of interest information in the electronic map. That is, if the point of interest information from all of the sources of point of interest information was to be incorporated in the map without consideration as to the point of interest information from other sources, the result could be multiple instances of a point of interest being included in electronic map data. Because duplicate point of interest information in electronic maps can lead to confusion and possibly errors in operations that rely on the electronic maps, such duplication is undesirable. In addition, the information provided from each point of interest source can be differently formatted, wholly or partially include different information, and/or can be erroneous, which exacerbates the above-described issue. That is, point of interest information may not only be duplicated, but some or all of the duplicate instances can be wholly or partially different, which would only lead to worsened confusion and errors should the point of interest information be used directly in electronic maps.

### SUMMARY

According to aspects of the invention, a method and an electronic device as recited in the independent claims are provided.

The electronic device may be operative to perform the method of any aspect or embodiment disclosed herein.

The steps of the methods according to any aspect or embodiment may be performed by or using processing circuity (e.g., at least one processor). The steps of the methods according to any aspect or embodiment may be performed by or using processing circuity (e.g., at least one processor) of the electronic device according to any aspect or embodiment. The electronic device may be a map source.

According to further aspects, there is disclosed machine-executable instruction code which, upon execution by at least one programmable processing circuit, causes execution of the method according to an embodiment.

According to further aspects, there is disclosed a non-transitory storage medium having stored thereon machine-executable instruction code which, upon execution by at least one programmable processing circuit, causes execution of the method according to an embodiment.

Further embodiments are disclosed in the following list:
Embodiment 1: An electronic device that handles point of interest (POI) information for electronic map data, the electronic device comprising:
   a memory; and
   at least one processor, the at least one processor configured to:
      acquire a plurality of POI data snippets, each POI data snippet including respective information about a respective POI;
      calculate, using at least one weight function, a POI-POI weight score for each pair of POI data snippets from among the plurality of POI data snippets;
      generate a POI score map including the pairs of POI data snippets arranged in a descending order of corresponding POI-POI weight scores, the POI score map including only pairs of POI data snippets having POI-POI weight scores above a POI-POI threshold value;
      cluster the POI data snippets into one or more POI clusters, the clustering including controlling which pairs of POI data snippets are clustered into POI clusters based on the order of the pairs of POI data snippets in the POI score map; and
      update POI information in the electronic map data based on information from the POI clusters.
Embodiment 2: The electronic device of embodiment 1, wherein, when clustering the POI data snippets into the one or more POI clusters, the at least one processor is configured to:
   responsive to determining that the POI score map includes at least one pair of POI data snippets:
   combine a determined pair of POI data snippets from the POI score map into a POI cluster, the determined pair of POI data snippets being a highest pair of POI data snippets in the order of the pairs of POI data snippets in the POI score map; and
   remove references to the POI data snippets from the determined pair of POI data snippets from the POI score map and an active list, the active list including a listing of POI data snippets from the plurality of POI data snippets that are awaiting clustering.
Embodiment 3: The electronic device of embodiment 2, wherein the at least one processor is further configured to:
   generate a POI-cluster score map, the generating including:
   calculating, using the at least one weight function, a POI-cluster weight score for POI-cluster pairs including each POI cluster and each POI data snippet in the active list; and
   generating a POI-cluster score map including the POI-cluster pairs arranged in a descending order of corresponding POI-cluster weight scores, the POI-cluster score map including only POI-cluster pairs having POI-cluster weight scores above a POI-cluster threshold value.
Embodiment 4: The electronic device of embodiment 3, wherein, when clustering the POI data snippets into the one or more POI clusters, the at least one processor is configured to:
   using the POI score map and the POI-cluster score map to generate new POI clusters or add POI data snippets to existing POI clusters, the using including:
      until both the POI-cluster score map and the POI score map are empty:
   selecting, based on POI-POI weight scores in the POI score map and POI-cluster weight scores in the POI-cluster score map, a given pair of POI data snippets to be combined into a POI cluster or a POI-cluster pair to be combined;
   removing, from the active list, the POI score map, and/or the POI-cluster score map, references to the given pair of POI data snippets or the POI data snippet from the POI-cluster pair; and
   returning to the selecting.
Embodiment 5: The electronic device of embodiment 4, wherein, when selecting the given pair of POI data snippets to be combined into a POI cluster or a POI-cluster pair to be combined, the at least one processor is configured to:
   when a POI-cluster weight score of a highest POI-cluster pair in the order of the POI-cluster pairs in the POI-cluster score map is equal to or exceeds a highest POI-POI weight score of a pair of POI data snippets in the order of the pairs of POI data snippets in the POI score map, add the POI data snippet from the highest POI-cluster pair to the POI cluster from the highest POI-cluster pair; or
   when a POI-POI weight score of a highest pair of POI data snippets in the order of the pairs of POI data snippets in the POI score map exceeds a POI-cluster weight score of a highest POI-cluster pair in the order of the pairs of POI-cluster pairs in the POI-cluster score map, generate a new POI cluster including POI data snippets from the highest pair of POI data snippets.
Embodiment 6: The electronic device of embodiment 4 or embodiment 5, wherein, when removing the references to the given pair of POI data snippets or the POI data snippet from the POI-cluster pair, the at least one processor is configured to:
   when combining a given pair of POI data snippets into a POI cluster, remove, from the active list, the POI score map, and/or the POI-cluster score map, each POI data snippet from the given pair of POI data snippets and pairings involving each POI data snippet in the given pair of POI data snippets; and
   when combining a POI-cluster pair, remove, from the active list, the POI score map, and/or the POI-cluster score map, a POI data snippet from the POI-cluster pair and pairings involving that POI data snippet.
Embodiment 7: The electronic device of any one of embodiments 4 to 6, wherein the at least one processor is further configured to:
   when both the POI-cluster score map and the POI score map are empty, for each remaining POI data snippet in the active list, create a respective POI cluster including only that POI data snippet.
Embodiment 8: The electronic device of any one of embodiments 3 to 7, wherein the at least one processor is further configured to:
   after clustering the POI data snippets into the one or more POI clusters, cluster the one or more POI clusters together, the clustering including:
   calculating, using the at least one weight function, a cluster-cluster weight score for cluster-cluster pairs including each pair of POI clusters from among the one or more POI clusters;
   generating a cluster-cluster score map including the cluster-cluster pairs arranged in a descending order of corresponding cluster-cluster weight scores, the cluster-cluster score map including only cluster-cluster pairs having cluster-cluster weight scores above a cluster-cluster threshold value; and
   combine pairs of POI clusters together based on the order of the corresponding cluster-cluster weight scores in the cluster-cluster score map.
Embodiment 9: The electronic device of any one of the preceding embodiments, wherein, when updating the POI information in the electronic map data, the at least one processor is configured to:
   selectively combine information from some or all of the point of interest data snippets in each POI cluster into aggregate POI information for a respective POI; and
   update point of interest records within the electronic map data based on the aggregate POI information.
Embodiment 10: The electronic device of any one of the preceding embodiments, wherein the at least one processor is further configured to:
   present, based on the electronic map data including the POI information, information about one or more POIs to a user.
Embodiment 11: The electronic device of any one of the preceding embodiments, wherein, when updating the POI information in the electronic map data, the at least one processor is configured to:
   store, in one or more electronic map files in the memory, data based on the POI clusters, the data representing a new POI in the electronic map or an update to an existing POI in the electronic map.

### BRIEF DESCRIPTION OF THE FIGURES

FIG. 1 presents a block diagram illustrating an electronic map source in accordance with some embodiments.
FIG. 2 presents a block diagram illustrating roads in a road network and points of interest.
FIG. 3 presents a block diagram illustrating an electronic device in accordance with some embodiments.
FIG. 4 presents a block diagram illustrating point of interest data snippets in accordance with some embodiments.
FIG. 5 presents a flowchart illustrating a process for updating point of interest information in an electronic map in accordance with some embodiments.
FIG. 6 presents a block diagram illustrating operations associated with generating a point of interest score map in accordance with some embodiments.
FIG. 7 presents a flowchart illustrating a process for handling point of interest information in accordance with some embodiments.
FIG. 8 presents a block diagram illustrating creating a point of interest cluster in accordance with some embodiments.
FIG. 9 presents a block diagram illustrating generating a point of interest-cluster score map in accordance with some embodiments.
FIG. 10 is a block diagram illustrating a point of interest score map and a point of interest-cluster score map in accordance with some embodiments.
FIG. 11 presents a block diagram illustrating a point of interest score map and a point of interest-cluster score map in accordance with some embodiments.

Throughout the figures and the description, like reference numerals refer to the same figure elements.

### DETAILED DESCRIPTION

The following description is presented to enable any person skilled in the art to make and use the described embodiments and is provided in the context of a particular application and its requirements. Various modifications to the described embodiments will be readily apparent to those skilled in the art, and the general principles defined herein may be applied to other embodiments and applications. Thus, the described embodiments are not limited to the embodiments shown, but are to be accorded the widest scope consistent with the principles and features disclosed herein.

### Electronic Maps

In this description, operations involving electronic maps are described. Generally, an electronic map is a digital representation of a map of an area (e.g., a geographic region such as a city, a country, etc.). Each electronic map includes map elements identifying real-world elements and/or other features represented by the electronic map. The map elements included in a particular electronic map can depend on the nature of the electronic map, consumers of the electronic map (e.g., human users, computing devices, autonomous vehicle controllers, software applications, etc.), and/or operations for which the electronic map is intended to be used. For example, in some cases, electronic maps include information about roads in a road network and/or other routes, throughways, or paths in an area. As another example, in some cases, electronic maps include information about points of interest in an area. In electronic maps, each map element is identified, i.e., characterized, represented, defined, etc., via map element information. For example, in some embodiments, the roads in the road network are indicated via a graph or other data structure having elements representing corresponding portions of the road network (e.g., with nodes representing intersections or other roadway meeting points, edges representing road segments, etc.). As another example, points of interest can be represented via records or other data structures that provide information about the points of interest.

### Points of Interest

In this description, points of interest (POIs) are referred to with respect to electronic maps. Generally, "point of interest" refers to an element, aspect, and/or feature of an electronic map that may be of interest to consumers of the electronic map for various reasons (where "consumers" can include entities such as human users, computing devices, autonomous vehicle controllers, software applications, etc.). Points of interest can be of many different types depending on the nature of the electronic map and the consumers thereof. As but a few examples, points of interest can include: businesses; residences; restaurants; road elements (e.g., roads, intersections, signs, traffic controls, etc.); path indicators; autonomous navigation elements; natural features (e.g., rivers, forests, etc.); healthcare facilities; artificial/virtual map features or records; viewpoints; and entertainment or sporting venues. Points of interest can be identified in electronic maps and elsewhere via information characterizing each point of interest. For example, the information characterizing a given point of interest can include some or all of: a relative or absolute geographical location of the given point of interest (e.g., geographic coordinates, street address, location relative to one or more reference points, etc.); name(s) and/or other designations of the given point of interest; contact information for the given point of interest (e.g., telephone number, email address, web site, etc.); an orientation of the given point of interest; open/closed hours, a type of the given point of interest; products manufactured, sold, or handled by a business at the given point of interest; an image or 2D/3D model of the point of interest; physical properties of the point of interest; etc.

### Overview

In the described embodiments, an electronic map source generates and/or updates one or more electronic maps. For example, an electronic map source such as an electronic map source, a government agency, an educational institution, or an individual user can generate and/or update the one or more electronic maps (i.e., can use one or more electronic devices for generating and/or updating the one or more electronic maps). After generating/updating the one or more electronic maps, the electronic map source can provide the one or more electronic maps to electronic map consumers (e.g., human users, computing devices, autonomous vehicle controllers, software applications, etc.). The electronic map consumers can use the one or more electronic maps for operations such as generating and providing navigation routes, locating points of interest (POI) or other map elements, providing visual representations mapped areas, autonomous vehicle navigation, and/or other operations.

In the described embodiments, the operations for generating and/or updating electronic map include operations for adding point of interest information to the electronic map. For these operations, the electronic map source: acquires (i.e., retrieves, requests, extracts, reads, etc.) raw point of interest data from one or more sources; processes the point of interest data to generate map-ready point of interest information; and adds the map-ready point of interest information to the electronic map and/or updates existing point of interest information in the electronic map based on the map-ready point of interest information. That is, when newly generating an electronic map, the electronic map source: collects raw point of interest data from one or more sources; processes the raw point of interest data to generate corresponding point of interest information for the new electronic map; and adds the point of interest information to the new electronic map. When updating a previously-generated electronic map, the electronic map source: collects raw point of interest data from the one or more sources; processes the raw point of interest data to generate corresponding point of interest information for the previously-generated electronic map; determines point of interest information to be added to or replaced in the previously-generated electronic map; and adds point of interest information to or replaces point of interest information in the previously-generated electronic map. For example, when updating a previously-generated electronic map, the electronic map source can remove point of interest information from the electronic map for points of interest that should no longer appear in the electronic map, update stale/outdated or incomplete point of interest information in the electronic map, and/or otherwise keep the point of interest information timely and accurate in the electronic map.

In the described embodiments, an electronic map source can acquire point of interest data from multiple sources. For example, the electronic map source can collect point of interest data from commercial sources (e.g., point of interest data providers, electronic map sources, banks, credit card companies, etc.), user or professional content on web sites (e.g., articles, reviews, guides, etc.), government or municipal data sources, news outlets, and/or other sources. In many cases, the point of interest data collected from two or more of the multiple sources includes point of interest data associated with or related to the same points of interest. For example, the point of interest data collected from two or more sources may both include information about a given restaurant. Processing the point of interest data to prepare the point of interest data for addition to an electronic map therefore includes clustering or combining the point of interest data from multiple sources - or, rather, point of interest data snippets generated therefrom - into point of interest clusters (where each point of interest data snippet includes information such as point of interest name, location/address, type, hours, orientation, position, and/or other information acquired from and/or generated based on respective point of interest data). Each point of interest cluster therefore includes point of interest data snippets generated from or based on point of interest data acquired from two or more sources, but determined to be associated with the same point of interest. Continuing the restaurant example from above, the point of interest data snippets generated based on point of interest data collected from the commercial source and the user review may be clustered together into a point of interest cluster that includes point of interest data snippets having information about the restaurant. The point of interest clusters themselves are then processed to prepare the point of interest data snippets in the clusters for addition to the electronic map, such as by merging clusters and/or generating aggregate point of interest information from the point of interest data snippets in each cluster.

In the described embodiments, the electronic map source performs an iterative process for using weight scores for clustering the point of interest data snippets. For the iterative process, the electronic map source first acquires or generates a respective point of interest data snippet from point of interest data collected from each source. Continuing the restaurant example from above, this can include acquiring or generating a respective point of interest data snippet based on the information collected from each of the commercial source and the user review. The electronic map source then generates score maps based on weight scores output from one or more weight functions, the score maps including only weight scores above specified threshold values and being sorted in descending order from high to low weight scores. The electronic map source also generates an active list, the active list including a listing of all point of interest data snippets awaiting clustering. The electronic map source next picks, based on the weight scores in the score maps, pairs of point of interest data snippets to be combined into new POI clusters or individual point of interest data snippets to be added to existing POI clusters. After combining pairs of point of interest data snippets into new POI clusters or adding individual point of interest data snippets to existing POI clusters, the electronic map source removes corresponding information from the score maps and the active list and updates the weight scores in the score maps as needed. The iterative process continues, with POI clusters being formed or added to as described above, until the score maps are empty. The electronic map source then adds point of interest data snippets remaining in the active list, which were not included in the score maps due to all weight scores involving the point of interest data snippets being below respective thresholds, to respective POI clusters on their own. At the conclusion of the iterative process, the electronic map source has a set of POI clusters of point of interest data snippets that can be used for generating respective point of interest information for the electronic map.

In some embodiments, for the iterative process, the score maps include a point of interest to point of interest (POI-POI) score map. For generating the POI-POI score map, the electronic map source calculates, using at least one weight function, a POI-POI weight score for each pair of POI data snippets from among all the POI data snippets. In some embodiments, the or each weight function takes, as input, information from the POI data snippet (e.g., name, location, type, and/or other information) and returns a weight score indicating a likelihood that the pair of POI data snippets match - and may therefore include information about the same point of interest. The electronic map source next adds pairs of POI data snippets having a weight score above a POI-POI threshold value (and thus having at least a specified likelihood of being associated with the same point of interest) to the POI-POI score map in descending order by POI-POI weight score.

In some embodiments, for the iterative process, the score maps include a POI-cluster score map, the POI-cluster score map being generated and updated as point of interest clusters are generated during the iterative process. For generating/updating the POI-cluster score map, the electronic map source calculates, using at least one weight function, a POI-cluster weight score for the pairing of each existing cluster and each point of interest data snippet awaiting clustering (i.e., each POI data snippet that is not yet included in a POI cluster). The electronic map source then adds POI-cluster scores having a weight score above a POI-cluster threshold value (and thus having at least a specified likelihood of being associated with the same point of interest) to the POI-cluster score map in descending order by POI-cluster weight score.

In some embodiments in which the POI-POI score map and the POI-cluster score map are used, the iterative process occurs as follows. The electronic map source compares the weight score of the highest-scored - i.e., first in the descending order - pair of POI data snippets in the POI-POI score map to weight score of the highest-scored POI-cluster pair in the POI-cluster map. When the highest-scored POI-cluster pair in the POI-cluster map has a score equal to or higher than the highest-scored pair of POI data snippets in the POI-POI score map, the electronic map source selects the POI-cluster pair for clustering. The electronic map source therefore determines that the POI in the POI-cluster pair should be added to the existing cluster in the POI-cluster pair. In contrast, when the highest-scored pair of POI data snippets in the POI-POI score map has a weight score higher than the highest-scored POI-cluster pair in the POI-cluster score map, the electronic map source selects the highest-scored pair of POI data snippets from the POI-POI score map to be added to a new cluster. That is, the electronic map source determines that a new cluster is to be generated and that the cluster is to include the highest-scored pair of POI data snippets from the POI-POI score map. In this way, the electronic map source preferentially adds POI data snippets to existing clusters, but otherwise forms new clusters from pairs of POI data snippets. After adding a POI data snippet to an existing cluster or generating a new cluster with a pair of POI data snippets, the electronic map source removes remaining references to the POI data snippet or pair of POI data snippets from the POI-POI score map, the POI-cluster score map, and the active list. In other words, once a POI data snippet has been added to a cluster, that POI data snippet has been settled/processed and references to that POI data snippet are no longer needed in the score maps and active list. The references to the POI snippet are therefore removed from the score maps and the active list. The electronic map source then updates the POI-cluster score map to include the newly generated or updated POI cluster. After updating the POI-cluster score map, the electronic map source returns to the above-described comparing and selecting operations to select a next POI-cluster pair or pair of POI data snippets to be combined/clustered. The electronic map source proceeds in this way until the POI-POI score map and the POI-cluster score map are both empty - i.e., until each pair of POI data snippets or POI-cluster pair has been processed or removed from the corresponding score map. Upon determining that both the POI-POI score map and the POI-cluster score map are empty, the electronic map source generates new single-POI-data-snippet clusters for each POI data snippet in the active list. In this way, the electronic map source generates as many clusters as possible having multiple/matching POI data snippets, and then defaults to adding individual/unmatched POI data snippets to their own clusters.

In some embodiments, for generating the POI-POI score map and/or the POI-cluster score map, and thus arranging the pairs of POI data snippets or POI-cluster pairs into the descending order, the electronic map source uses one or more ranking values and/or other identifiers for resolving ties. For example, each POI data snippet can be assigned a value based on a data source of that POI data snippet; a name, location or other attribute of that POI data snippet; and/or other value associated with or generated based on that POI data snippet. The assigned values for two or more POIs can then be used to resolve ties in weight scores.

In some embodiments, each of the above-described weight functions includes respective mathematical, logical, comparison, and/or other operations that are used for computing or determining a weight score. The weight score represents a likelihood that a pair of point of interest data snippets are referring to, associated with, and/or otherwise include information about a same point of interest. For example, in some embodiments, a weight function takes, as input, a location and a name of the point of interest from each point of interest data snippet and returns a value based on a distance between the points of interest and a match (or not) between the names of the point of interest. In these embodiments, point of interest data snippets including a same location and having completely matching names are accorded a highest weight score while points of interest data snippets identifying different locations and/or have mismatching names have lower weight scores.

In some embodiments, after generating the clusters using the above-described iterative process, the electronic map source combines/clusters together the clusters themselves. For this operation, the electronic map source uses one or more weight functions to calculate cluster-cluster weight scores, generates a cluster-cluster score map in descending order of cluster-cluster weight scores, and then processes the cluster-cluster score map to merge the clusters.

In some embodiments, after generating the clusters and combining/clustering the clusters, the electronic map source has a set of POI clusters, each POI cluster including one or more point of interest data snippets likely having information about a same point of interest. Although the point of interest data snippets in each POI cluster have been determined - via the weight functions used for generating each of the score maps - to be likely to include information about a same point of interest, the information in each point of interest data snippet may include different types of information, errors, etc. The electronic map source therefore processes the point of interest data snippets in each POI cluster to generate aggregate point of interest information for each POI cluster. For example, the processing can include generating or selecting a full name for the point of interest in a given cluster, combining information such as hours of operation, type, etc., and/or otherwise readying the information in the POI data snippets in each cluster to be added to the electronic map.

By clustering point of interest data snippets using the iterative process described herein, the described embodiments enable data collected from different POI data sources to be usefully and efficiently combined for subsequent addition to an electronic map. By combining the point of interest data snippets, the described embodiments can avoid including duplicate and possibly different point of interest information in electronic maps based on two or more POI data snippets having different information about the same point(s) of interest. This can help to improve the accuracy, usefulness, and relevance of the electronic maps. By using the one or more weight functions to generate the weight scores and sorting the score maps on weight scores as described herein, the described embodiments can provide an ordering to POI data snippets that does not unexpectedly fluctuate between two or more runs of the above-described process. In other words, the above-described process will result in similar POI information being added to electronic maps even where the above-described process is performed multiple times (such as with periodic electronic map updates, etc.) - even with changes to the particular POI data provided by the POI data sources. This means that updates of the electronic map are more likely to be consistent, have point of interest information that is useful and doesn't unexpectedly or incorrectly change between updates, etc. Because the technical field of generating and updating electronic maps is an important field - in that many users regularly use electronic maps to navigate to destinations, perform autonomous driving, etc. - improvements to operations for adding point of interest information to electronic maps are significant improvements.

### Electronic Map Source

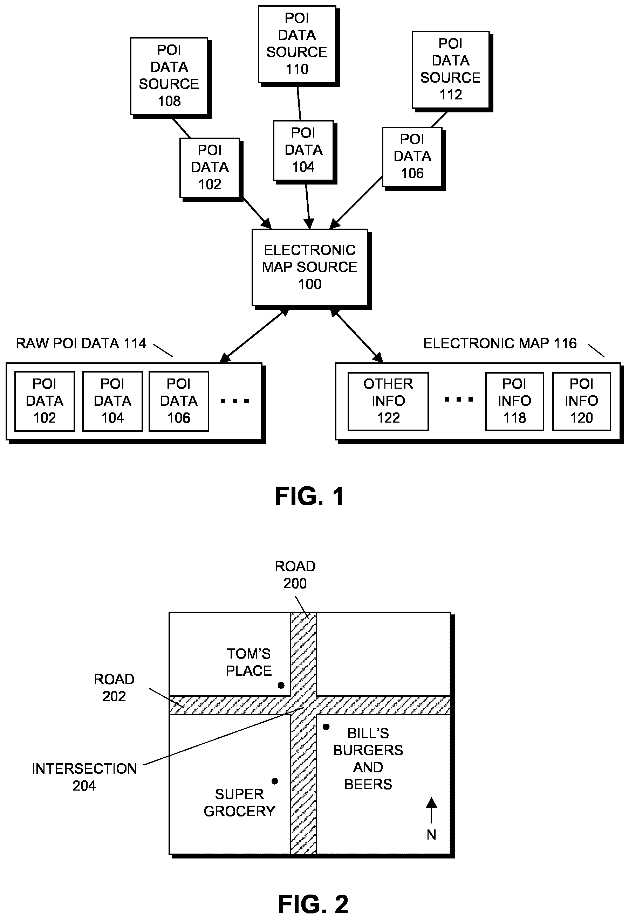

In the described embodiments, an electronic map source generates an electronic map including point of interest information, possibly along with other information (e.g., information about roads in a road network, etc.). FIG. 1 presents a block diagram illustrating an electronic map source 100 in accordance with some embodiments. Electronic map source 100 can be or include any entity that newly generates or updates electronic maps. For example, electronic map source 100 can be or include a company or commercial entity, a government entity, an academic entity, an individual user, etc. Generally, electronic map source 100 acquires point of interest (POI) data including information about, characterizing, or otherwise associated with points of interest. The POI data as it is acquired is "raw" and is not ready for inclusion in an electronic map. Electronic map source 100 therefore processes the POI data to ready the POI data for inclusion in one or more electronic maps. As described herein, processing the POI data includes clustering (e.g., combining, gathering together, or otherwise associating) POI data from different sources into aggregate POI data representing individual points of interest, which the electronic map source can then directly or indirectly include in one or more electronic maps.

As can be seen in FIG. 1, electronic map source 100 acquires point of interest (POI) data 102-106 from POI data sources 108-112, respectively. POI data 102-106 each include information about one or more points of interest, although the particular point(s) of interest in each of POI data 102-106 may be different. For example, the information in some or all of POI data 102-106 may include or be useable for determining a name, a location and/or an address, a phone number, a type of the point of interest, goods offered or sold at the point of interest, one or more properties of road elements (e.g., lane arrangements, travel restrictions, etc.), and/or other information. POI data sources 108-112 can be any entity that provides information about, associated with, or otherwise characterizing points of interest. For example, in some embodiments, POI data source 108 is a commercial POI data provider, such as a mapping company or POI database creator, and POI data 102 is or is included in a data collection, database, list, and/or table including POI data for one or more points of interest and provided to customers. As another example, in some embodiments, POI data source 110 is a financial institution (e.g., a bank, credit card company, etc.) and POI data 104 includes records having information about businesses (e.g., grocery stores, retail businesses, restaurants, hotels, etc.) with which the financial institution interacts. As yet another example, in some embodiments, POI data source 112 is a web site that directly or indirectly provides information associated with, directed to, or otherwise concerned with points of interest (e.g., a consumer review web site, a newspaper web site, a business directory web site, etc.) and POI data 106 is data acquired from the web site (e.g., provided in response to a request for POI information, scraped, etc.).

FIG. 2 presents a block diagram illustrating roads in a road network and points of interest. More specifically, FIG. 2 presents three fictitious points of interest that may be used in some examples in this description. As shown in FIG. 2, roads 200-202 cross each other, forming a four-way intersection 204. Across intersection 204 from one another are two restaurants, Tom's Place and Bill's Burgers and Beers (shown via corresponding black dots in FIG. 2). There is also a grocery store, Super Grocery, south of intersection 204 on road 200 (north is marked via the N in FIG. 2).

In some embodiments, electronic map source 100 acquires POI data 102-106 from each POI data source 108-112. For example, electronic map source 100 may formally request POI data for a region and receive in response POI data 102 from POI data source 108 (e.g., receive the above-described package of POI information via a network, computer-readable storage medium, etc.). As another example, electronic map source 100 may formally request POI data and receive in response POI data 104 from POI data source 110 (e.g., receive a database or table including records of points of interest via a network, computer-readable storage medium, etc.). As another example, electronic map source 100 may acquire POI data 106 from a web site or other interface of POI data source 112 (e.g., scrape or otherwise collect text and/or other information from a social media web site, a commercial or user review web site, etc.).

In some embodiments, the particular information included in the POI data collected from a given POI data source corresponds to a nature and type of the given POI data source. That is, each POI data source may provide different or differently-arranged information. For example, in an embodiment where POI data sources 108-112 are as described above, professionally- or commercially-prepared POI data 102 may include relatively complete information about points of interest and may be formatted in a specified format (e.g., may be a database or table of information having particular fields/information about points of interest, etc.). For instance, assuming that POI data 102 includes information about Bill's Burgers and Beers, the information may include the full name of the restaurant, along with complete hours, a business type, full location information (e.g., GPS coordinates, full street address), etc. Continuing the example, POI data source 112 (e.g., a consumer review web site) may include information about points of interest, but may be less complete, less formal (e.g., included in voluntarily user provided reviews, etc.), and/or less accurate. For instance, assuming that POI data 106 includes information about Bill's Burgers and Beers, the information may include an informal or incomplete name, e.g., "Bill's Burgers," may not include full business hours, may include information for determining the business type, but not include a formal business type, may include simplified location information (only the address, a relative or informal location description, etc.), etc.

After acquiring POI data 102-106 from POI data sources 108-112, electronic map source 100 stores POI data 102-106 as raw POI data 114. In this initial state, the POI data is "raw" in that the POI data can have the above-described differences, can duplicate information about POIs, can include errors, missing, or misleading information, and is generally not ready or acceptable for inclusion in an electronic map. From raw POI data 114, electronic map source 100 extracts, generates, reads, or otherwise acquires POI data snippets. For example, when using a professionally prepared POI database, list, or table, the POI data snippets can be read from information in the POI database, list, or table. As another example, when using the text of user reviews from a user review website, extracting the POI data snippets from the POI data can include identifying information within POI data to be included in the POI data snippets and generating or creating POI data snippets therefrom. For instance, POI data snippets may be generated by using a machine learning model or other text processing model to acquire information from user reviews to be added to a POI data snippet - which may in turn include synthesizing or otherwise newly generating information based on information found in the user reviews.

After extracting the POI data snippets from the raw POI data, electronic map source 100 processes the POI data snippets as described herein to prepare the POI data snippets for conversion into POI information to be included in electronic map 116. For brevity in describing FIG. 1, those operations are not fully described with respect to FIG. 1. Instead, it is noted that, in some embodiments, the operations include one or more of: preprocessing the POI data snippets; clustering the data snippets into POI clusters associated with single respective points of interest (each POI cluster including one or more POI data snippets); and post-processing and aggregating the POI data snippets in multi-POI data snippet POI clusters to create aggregate POI information. The aggregate POI information is then included in one or more electronic maps, as shown via POI information (INFO) 118-120. Generally, POI information 118-120 each include formal information about a respective point of interest that, to the extent possible given the data in POI data 102-106, characterizes, identifies, describes, or otherwise represents that point of interest with respect to the overall map data in electronic map. In other words, the data of electronic map 116 is changed (e.g., the bits/bytes digital information representing the electronic map are stored, modified, deleted, and/or otherwise changed) to incorporate the POI information generated via the operations described herein.

In some embodiments, in addition to POI information 118-120, electronic map source 100 includes other information (INFO) 122 in electronic map 116. For example, in some embodiments, other information 122 includes information about roads in a road network. In some embodiments, other information 122 is a large portion of the information in electronic map 116. In addition, although shown separately, in embodiments where electronic map 116 includes other information, POI information 118-120 may be intermixed or otherwise incorporated into the other information.

### Electronic Device

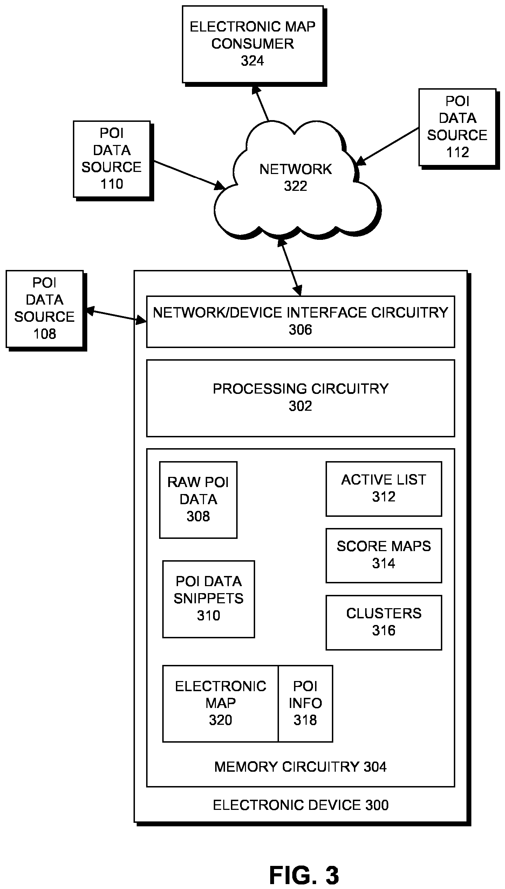

In the described embodiments, an electronic map source (e.g., electronic map source 100) uses one or more electronic devices for performing some or all of the operations herein described. FIG. 3 presents a block diagram illustrating electronic device 300 in accordance with some embodiments. As can be seen in FIG. 3, electronic device 300 includes processing circuitry 302, memory circuitry 304, and network/device interface circuitry 306. Generally, processing circuitry 302, memory circuitry 304, and network/device interface circuitry 306 are implemented in hardware. That is, processing circuitry 302, memory circuitry 304, and network/device interface circuitry 306 are implemented using corresponding integrated circuitry, discrete circuitry, and/or devices. For example, in some embodiments, processing circuitry 302, memory circuitry 304, and network/device interface circuitry 306 are implemented in integrated circuitry on one or more semiconductor chips, are implemented in a combination of integrated circuitry on one or more semiconductor chips in combination with discrete circuitry and/or devices, or are implemented in discrete circuitry and/or devices. In some implementations, processing circuitry 302, memory circuitry 304, and network/device interface circuitry 306 perform operations for, dependent on, or associated with handling point of interest information for electronic maps as described herein.

Processing circuitry 302 is a functional block that performs computational, memory access, control, and/or other operations. For example, processing circuitry 302 can be or be included in one or more central processing units (CPUs), one or more graphics processing units (GPUs), one or more accelerated processing units (APUs), one or more systems on a chip (SOCs), one or more field programmable gate arrays (FPGAs), etc.

Memory circuitry 304 is a functional block that stores data for accesses by other functional blocks in electronic device 300. For example, in some implementations, memory circuitry 304 is or is included in an integrated circuit memory in which copies of data retrieved from mass storage (not shown) or newly created are stored for subsequent accesses by the other functional blocks. Memory circuitry 304 includes one or more arrays of memory circuitry such as fifth generation double data rate synchronous dynamic random-access memory (DDR5 SDRAM) and/or other types of memory circuitry, as well as control circuitry for handling accesses of the data stored in the memory circuitry.

In some embodiments, memory circuitry 304 stores inputs to, intermediate data used in, and/or outputs from the operations for generating POI information for electronic maps as described herein. In some embodiments, the inputs to the operations for generating the POI information include raw point of interest (POI) data 308, which can be similar to raw POI data 114 and thus can include POI data such as POI data 102-106. Recall that raw POI data 308 includes POI data acquired from POI data sources including POI data sources 108-112 processing circuitry 302 can process to extract POI data snippets to be used in subsequent operations. In some embodiments, the intermediate data used in the operations for generating the POI information include POI data snippets 310, active list 312, score maps 314, and clusters 316. POI data snippets 310 includes POI data snippets extracted from or otherwise based on raw POI data 308 to be used in generating clusters of related POI data snippets. Active list 312 is a data structure (e.g., a list, table, hash, etc.) that includes information about POI data snippets awaiting clustering. Score maps 314 includes a set of score maps, each score map used by processing circuitry 302 for determining POI data snippets to be combined into clusters/clustered together based on the POI data snippets having been determined by processing circuitry 302 to be associated with, related to, or otherwise pertinent to a same point of interest (i.e., POI data snippets with information about a same restaurant, roadway feature, public park, etc.). Clusters 316 includes clusters of POI data snippets. In some embodiments, the outputs from the operations for generating POI information include POI information 318, which is a data structure (e.g., a table, list, graph, etc.) that includes information about points of interest. In some embodiments, POI information 318 is incorporated in electronic map 320. For example, in some embodiments, electronic map 320 includes information about a road network (e.g., intersections, road segments, speed limits, permitted maneuvers, etc.) and POI information 318 is included in electronic map 320 as information about points of interest associated with, proximal to, or otherwise related to the road network.

Network/device interface circuitry 306 is a functional block that includes circuitry for communicating on a network (e.g., the Internet, an Ethernet network, etc.) and for communicating with a mass storage device and/or peripheral devices. As can be seen in FIG. 3, in some embodiments, electronic device 300 is coupled to POI data source 108 via network/device interface circuitry 306 (e.g., is a flash drive, optical drive, tape drive, USB device, and/or other device). In addition, electronic device 300 is coupled to POI data sources 110-112 via network 322, which can be the Internet, a local wired and/or wireless network, etc. Electronic device 300 is also coupled to electronic map consumer 324 (i.e., a user, a software application, an autonomous vehicle, etc.) via network 322. In some embodiments, electronic device 300 provides electronic map information (e.g., the digital files into which the electronic map is incorporated) to electronic map consumer 324 via network 322.

Electronic device 300 is shown using particular numbers and arrangements of elements (e.g., functional blocks and devices such as processing circuitry 302, memory circuitry 304, etc.). Electronic device 300, however, is simplified for illustrative purposes. In some embodiments, a different number or arrangement of elements is present in electronic device 300. For example, electronic device 300 may include power subsystems, displays, etc. Generally, electronic device 300 includes sufficient elements to perform the operations herein described.

Electronic device 300 can be, or can be included in, any electronic device that performs operations for handling point of interest information for electronic maps. For example, electronic device 300 can be, or can be included in, electronic devices such as desktop computers, laptop computers, servers, data bricks, artificial intelligence apparatuses, controllers, vehicles, etc., and/or combinations thereof.

### Point of Interest Data Snippets

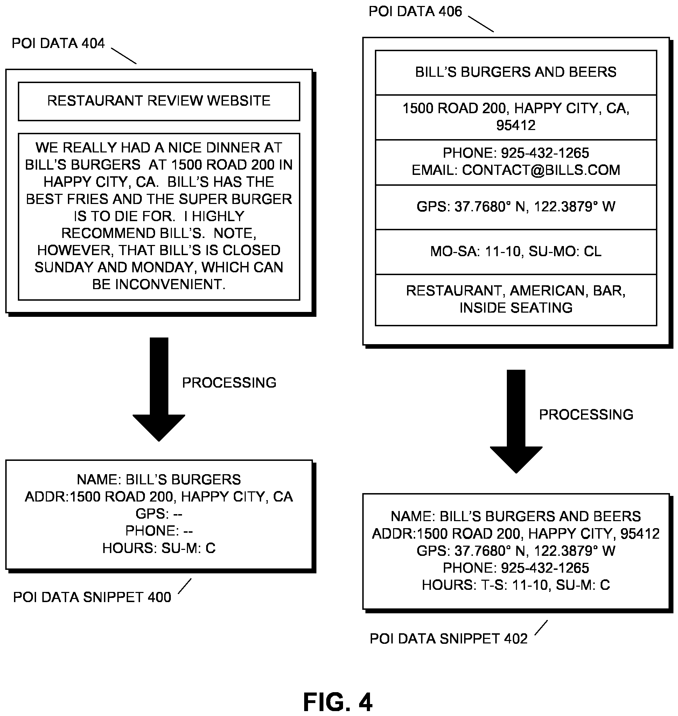

In the described embodiments, an electronic map source uses point of interest data snippets for operations for updating point of interest data in an electronic map. Generally, a point of interest data snippet is a data structure (e.g., record, variable, table, etc.) including information about a point of interest. Point of interest data snippets generated from (e.g., extracted from, created based on, etc.) and include information from or based on raw point of interest data. FIG. 4 presents a block diagram illustrating point of interest data snippets in accordance with some embodiments. For the example in FIG. 4, it is assumed that POI data snippets are generated that include information about Bill's Burgers and Beers restaurant, as seen in FIG. 2, although point of interest data snippets can be generated from other raw point of interest data.

As shown in FIG. 4, point of interest (POI) data snippets 400-402 are generated from POI data 404-406, respectively. POI data 404 includes the text of a user review from a restaurant review website. The text, which was acquired from the restaurant review website (e.g., via scraping, requesting, or another mechanism), is relatively informal and includes a user's opinion on Bill's Burgers and Beers restaurant. An electronic map source (e.g., electronic map source 100) processes POI data 404 via a machine learning model, text processing routine, and/or other processing technique to extract useful point of interest information from POI data 404. The point of interest information extracted from POI data 404 is then used to generate POI data snippet 400. In some embodiments, POI data snippet 400 is or includes a data structure having a number of fields (e.g., name, address, etc.), each field being filled in (or not) when the point of interest data snippet 400 is generated. For example, based on the information available in POI data 404, POI data snippet 400 includes a partial/informal name, "Bill's Burgers," for the restaurant along with the address and partial hours.

POI data 406 is a data record from a point of interest data provider. Unlike POI data 404, POI data 406 was professionally prepared and includes the full name, address, phone number, contact email, and other business information for Bill's Burgers and Beers restaurant. The electronic map source processes POI data 406 to extract useful point of interest information. The point of interest information extracted from POI data 406 is then used to generate POI data snippet 402. POI data snippet 402 includes information such as the full name of the restaurant, the address, the GPS location, the hours, etc.

### Process for Updating Point of Interest Information in an Electronic Map

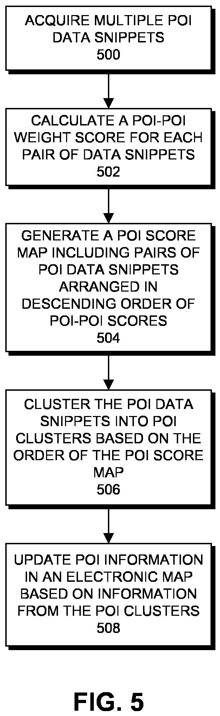

In the described embodiments, an electronic map source performs operations for updating point of interest information in an electronic map. FIG. 5 presents a flowchart illustrating a process for updating point of interest information in an electronic map in accordance with some embodiments. Note that the operations shown in FIG. 5 are presented as a general example of operations performed by some embodiments. The operations performed by other embodiments include different operations, operations that are performed in a different order, and/or operations that are performed by different entities or functional blocks.

In the following description of the operations of FIG. 5, the operations are described as being performed by an electronic map source. In some embodiments, the electronic map source uses or otherwise relies on one or more electronic devices (e.g., electronic device 300 and/or other electronic devices) for performing the operations. That is, some or all of the acquiring, calculating, generating, clustering, and updating are performed by the one or more electronic devices, such as servers in a data center, desktop computers, etc.

For the process shown in FIG. 5, an electronic map source (e.g., electronic map source 100) acquires multiple POI data snippets (step 500). For this operation, the electronic data source can acquire the multiple POI data snippets in various ways. For example, in some embodiments, the electronic map source itself collects raw POI data from data sources (e.g., POI data source 108-112, etc.) and generates the POI data snippets from raw POI data (e.g., generates POI data snippets 400 from raw POI data 404). As another example, in some embodiments, the electronic map source reads POI data snippets from a computer-readable medium upon which the POI data snippets are stored or via a network from one or more other electronic devices (e.g., other servers in a data center, etc.).

The electronic map source then calculates a point of interest-point of interest (POI-POI) weight score for each pair of POI data snippets among the multiple POI data snippets (step 502). Generally, the POI-POI weight score is a numeric or other value that indicates a likelihood of the POI data snippets including information associated with a same point of interest. For example, assuming that POI-POI weight scores are numeric values between zero and one, a value of one for the POI-POI weight score can represent an ideal match between the information in the POI data snippets - and thus the highest likelihood that the pair of POI data snippets include information associated with the same point of interest. For instance, if the pair of POIs are very close or matching in location, have the same names, etc. In contrast, zero can represent the lowest likelihood of the pair of POI data snippets include information associated with the same point of interest, such as when all of the information in the POI data snippets is different (and are, indeed, different points of interest).

In some embodiments, calculating the POI-POI weight score for each pair of POI data snippets includes inputting data from each of the POI data snippets into one or more weight functions that return, as output(s), the POI-POI weight scores representing the likelihood that the pair of point of interest data snippets are referring to, associated with, and/or otherwise include information about a same point of interest. Each weight function includes a set of comparison, mathematical, logical, and/or other operations that are used for determining a weight score. For example, in some embodiments, a weight function takes, as input, specified data from each point of interest data snippet (e.g., a location of the point of interest, a name of the point of interest, open hours, and/or other specified data); performs a one or more operations on or involving the specified data (e.g., comparison, logical, etc.); and returns a weight score reflecting the similarity (or not) of the POI data snippets. In these embodiments, point of interest data snippets including matching specified data (e.g., very close geographic locations, matching names, same open hours) are accorded a highest weight score by the weight function. On the other hand, pairs of point of interest data snippets having mismatching specified data are accorded relatively lower weight scores by the weight function, depending on the nature of the mismatches in the specified data.

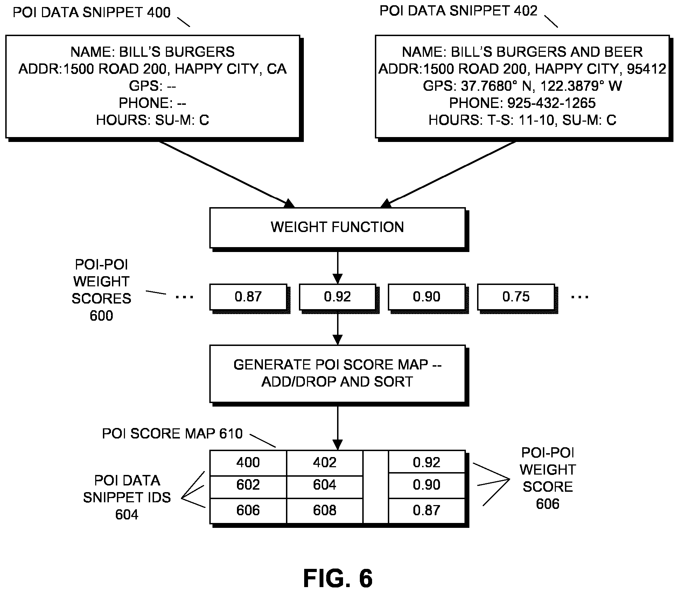

FIG. 6 presents a block diagram illustrating operations associated with generating a POI score map in accordance with some embodiments. For the example in FIG. 6, POI data snippets 400 and 402 (initially shown in FIG. 4) are used as examples, along with other example POI data snippets 602-608 (not shown for clarity). In addition, it is assumed that the weight function returns a score of 0.92 for the pair of POI data snippets 400 and 402, indicating a solid, but not perfect match. That is, given the differences in the names and addresses in POI data snippets 400 and 402 as shown in FIG 4 (and possibly the information in POI data snippet 402 that is not found in POI data snippet 400), the weight function returns a weight score lower than the ideal weight score. In addition, the weight function returns POI weight scores of 0.87, 0.90, and 0.75 for the additional pairs of POI data snippets, i.e., POI data snippets 602-608, based on the strength of their respective matches.

As the POI-POI weight scores (e.g., POI-POI weight scores 600) are calculated for each pair of POI data snippets, the electronic map source generates a POI score map including pairs of POI data snippets arranged in a descending order of POI-POI weight scores (step 504). For this operation, the electronic map source generates a data structure (e.g., a list, table, hash, etc.) into which the contents of the POI score map are added. The electronic map source adds POI-POI weight scores, and thus the corresponding pairs of POI data snippets, to the POI score map in descending order as shown in POI score map 610, which includes POI-POI weight scores 606 in descending order (i.e., from a highest POI-POI weight score to a lowest POI-POI weight score). In some embodiments, for this operation, as each pair of POI data snippets is added to POI score map 610 the electronic device adds an identifier - POI data snippet ID 604 - for each of the POI data snippets to the POI score map 610, along with the respective POI-POI weight score 606. In some embodiments, pairs of POI data snippets having a weight score below a POI-POI threshold value - and thus having a lower-quality weight score indicating a poor match between particular pairs of POI data snippets - are dropped/discarded and not added to the POI score map. For the example in FIG. 6, it is assumed that the threshold is 0.80 and thus the POI weight score of 0.75 is too low to be included in POI score map 610. The pair of POI data snippets is therefore discarded (and will not be clustered into a POI cluster together).

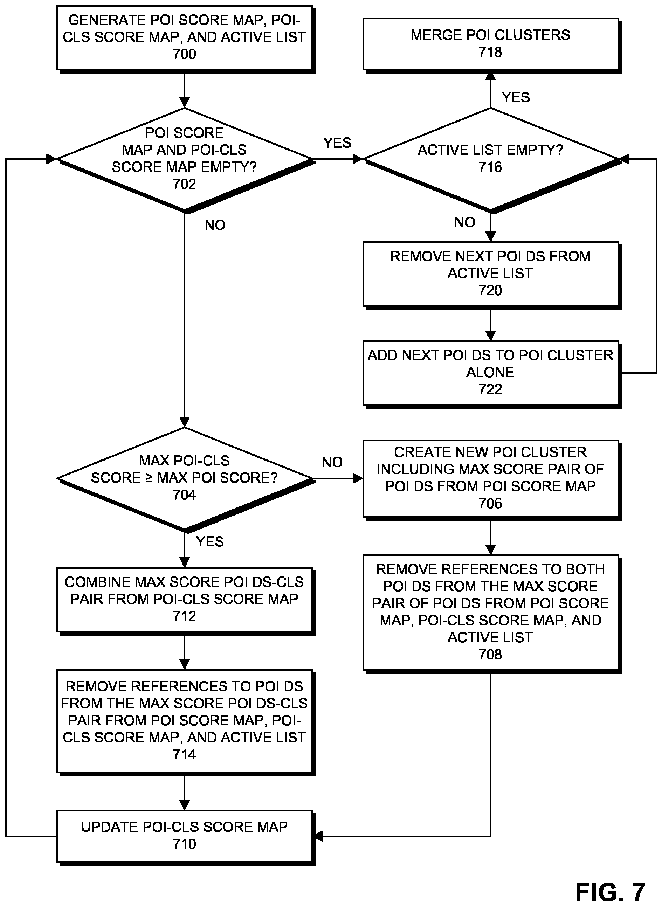

The electronic map source then clusters the POI data snippets into POI clusters based on the order of the pairs of POI data snippets POI score map (step 506). For this operation, the electronic map source uses the POI score map to determine pairs of POI data snippets to be added to POI clusters. Generally, each point of interest cluster includes POI data snippets generated from or based on point of interest data acquired from two or more sources, but determined to be associated with the same point of interest. For the clustering operation, then, the electronic map source gathers/collects POI data snippets into clusters based on weight scores for the pairs of POI data snippets. The clustering operation and subsequent operations on the clusters (e.g., merging/clustering POI clusters together) are described in more detail below with respect to FIGs. 7-11.

The electronic map source then updates POI information in an electronic map based on the information from the POI clusters (step 508). For this operation, the electronic map source, during the generation of a new electronic map or the updating of an existing electronic map, can add information from or generated based on each POI cluster to the electronic map. For example, assuming that Bill's Burgers and Beers opened for business after an existing map was generated and that a POI cluster was generated based on POI data snippets 400 and 402, the electronic map source can add information about Bill's Burgers and Beers to the map using the information in the POI cluster. In some embodiments, information in POI clusters is processed to generate aggregate information before the electronic map updating operation. For example, assuming that the POI cluster includes POI data snippets 400 and 402, the processing can include selecting the name to be used for the POI information in the electronic map (from among "Bill's Burgers" in POI data snippet 400 and "Bill's Burgers and Beers" in POI data snippet 402), determining the operating hours to be used (from among the partial hours in POI data snippet 400 and the complete hours in POI data snippet 402), and otherwise cleaning up and preparing the information in the POI cluster to be used in the electronic map.

Although certain elements and operations are shown in FIGs. 5-6 and described herein, in some embodiments, different elements are used and/or operations are performed. Generally, in the described embodiments, an electronic map source uses one or more electronic devices to handle POI information for electronic maps as claimed.

### Process for Handling Point of Interest Information

In the described embodiments, an electronic map source performs operations for updating point of interest information in an electronic map. FIG. 7 presents a flowchart illustrating a process for handling point of interest information in accordance with some embodiments. Note that the operations shown in FIG. 7 are presented as a general example of operations performed by some embodiments. The operations performed by other embodiments include different operations, operations that are performed in a different order, and/or operations that are performed by different entities or functional blocks.

In the following description of the operations of FIG. 7, the operations are described as being performed by and/or attributed to an electronic map source. In some embodiments, the electronic map source uses or otherwise relies on one or more electronic devices (e.g., electronic device 300 and/or other electronic devices) for performing the operations. That is, some or all of the operations shown in FIG. 7 are performed by the one or more electronic devices, so that one or processing circuitry of the one or more electronic devices performs the operations of FIG. 7.

For the process shown in FIG. 7, it is assumed that the electronic map source previously acquired raw POI data (e.g., raw POI data 114 or POI data 404-406) from one or more POI data sources (e.g., POI data sources 108-112). In addition, it is assumed that the electronic map source has generated corresponding POI data snippets (e.g., POI data snippets 400-402). The electronic device therefore has a set of POI data snippets awaiting clustering into POI clusters - in preparation updating the point of interest information in the electronic map based on the information in the POI clusters.

For the process shown in FIG. 7, the electronic map source generates a POI score map, a POI-cluster score map, and an active list (step 700). For generating the POI score map, the electronic map source inputs each pair of POI data snippets from among the POI data snippets into at least one weight function and receives, as an output of the at least one weight function, a POI-POI weight score. The electronic map source compares the POI-POI weight scores to a POI-POI threshold value, discards pairs of POI data snippets having a weight score below the threshold, and adds pairs of POI data snippets having a weight score equal to or above the threshold to the POI score map in a descending order of POI-POI weight scores. When this operation is complete, the electronic map device has a POI score map with pairs of POI data snippets listed in order of the corresponding POI-POI weight score (e.g., as in POI score map 610). As a note, it is assumed for the example in FIG. 7 that the POI score map includes multiple pairs of POI data snippets and is therefore not empty - i.e., that the multiple pairs of POI data snippets had weight scores above the threshold. For generating the POI-cluster score map, because no POI clusters have yet been created, the electronic map device generates an empty POI-cluster score map (the empty POI-cluster score map can subsequently be updated in step 710). For generating the active list, the electronic map source compiles a list of all the POI data snippets awaiting clustering - which initially includes all of the POI data snippets in the set of POI data snippets.

In some embodiments, when generating the POI score map as described above, the electronic map source resolves ties in POI-POI weight scores using one or more ranking values for the POI data snippets and/or other identifiers. That is, in order to place the pairs of POI data snippets in the POI score map in a consistent order, the electronic map source uses values associated with the POI data snippets to determine which of pairs of POI data snippets having a same POI-POI weight score - i.e., "tied" pairs of POI data snippets - is to be inserted in the POI score map in the higher relative position. In some embodiments, the particular ranking values and/or other identifiers used by the electronic map source depends on the information available in the POI data snippets and/or the POI data source(s) that provided the POI data upon which the POI data snippets are based. For example, in some embodiments, the electronic device can use, as the ranking value and/or other identifier, a distance between the points of interest in the pairs of POI data snippets (in embodiments where the location of the points of interest are included in the POI data snippets), an identifier associated with a POI data source for one or both of the POI data snippets, and/or another value assigned to the pair of POI data snippets or the individual POI data snippets therein.

The electronic map source then determines if the POI score map and a POI-cluster (CLS) score map are both empty (step 702). For this operation, the electronic map source examines the POI score map and the POI-cluster score map to determine whether any pairs of POI data snippets remain in the POI score map (and thus are awaiting clustering) and/or whether any POI-cluster pairs remain in the POI-cluster score map (and similarly are awaiting clustering). Given that the POI score map includes multiple pairs of POI data snippets as described above, the POI score map is not empty. The POI-cluster score map, however, is empty in its initial state. Because the POI score map is not empty (step 702), the electronic map source proceeds to step 704.

The electronic map source next determine whether a weight score for the highest weight scored POI-cluster pair in the POI-cluster score map ("max POI-CLS score") is equal to or higher than a weight score of the highest weight scored pair of POI data snippets in the POI score map ("max POI score") (step 704). For this operation, the electronic map source compares the highest weight score from the POI score map to the highest weight score from the POI-cluster score map to determine which score map holds the highest weight score. In some embodiments, the comparison slightly favors the POI-cluster score map (i.e., for the "equals" case) in order to preferentially add POI data snippets to existing clusters (as described for step 712) instead of creating new clusters. Given that the POI-cluster score map is empty, the electronic map source finds the highest weight score in the POI score map (step 704) and proceeds to step 706.

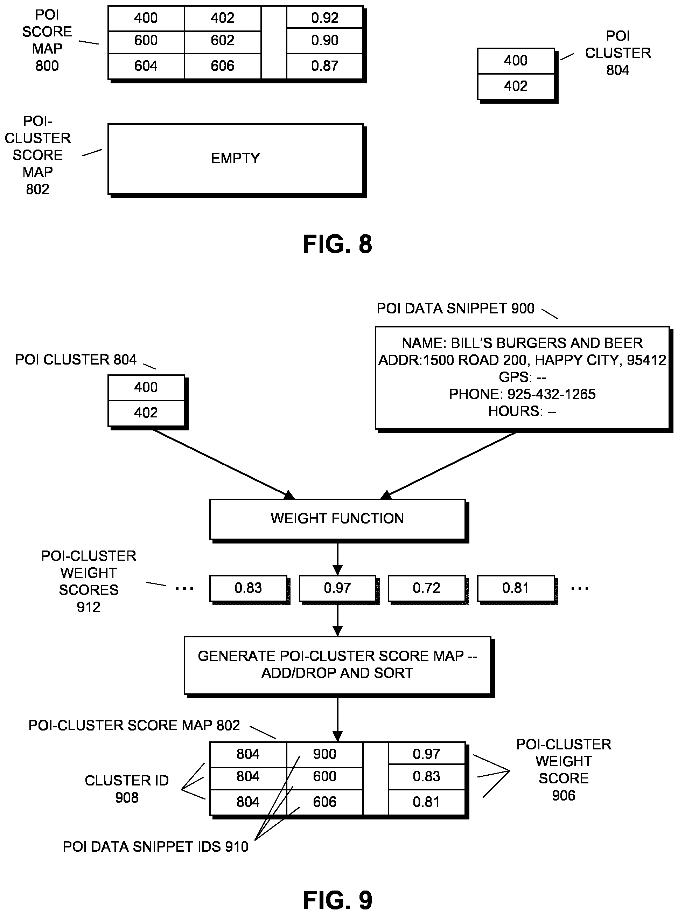

The electronic map source then creates a new POI cluster including the highest scored ("max score") pair of POI data snippets (DS) in the POI score map (step 706). For this operation, the electronic map source generates a record of a new cluster, the new cluster including the highest scored pair of POI data snippets. Note that the POI data snippets themselves may or may not be moved/clustered together (e.g., in a memory of an electronic device used by the electronic map source for performing the operations of FIG. 7). In some embodiments, therefore, step 706 includes a record-keeping operation in which a data structure referred to herein as a "cluster" (e.g., a list, a record, a table, a hash, etc.) is generated including the highest scored pair of POI data snippets. FIG. 8 presents a block diagram illustrating the creation of a POI cluster in accordance with some embodiments. As can be seen in FIG. 8, POI score map 800 (which is similar to POI score map 610) includes a pair of POI data snippets having a weight score of 0.92 and POI-cluster score map 802 is empty. The electronic map source therefore determines that a new POI cluster is to be created (step 704) and creates POI cluster 804. POI cluster 804 includes POI data snippets 400 and 402, which are, referring to FIG. 4, POI data snippets from two different POI data sources that include information about a same point of interest (both POI data snippets include information about Bill's Burgers and Beer restaurant). Note that, in this case, the clustering operation is correct, in that both the POI data snippets refer to the same point of interest. It is therefore useful and correct to cluster these POI data snippets together for the purpose of creating POI information for an electronic map.

After creating the POI cluster, the electronic map source removes references to both POI data snippets from the highest scored pair of POI data snippets from the POI score map, the POI-cluster score map, and the active list (step 708). Generally, for this operation, after a pair of POI data snippets is added to a cluster, the POI data snippets are no longer awaiting clustering (i.e., are no longer candidates to be added to a cluster) and are therefore removed from the score maps (where the "score maps" include both the POI score map and the POI-cluster score map) and the active list. Given that a POI data snippet can appear in each of the score maps in multiple places - e.g., as part of one or more additional POI data snippet pairs in the POI score map, etc. - this operation includes removing all references to each POI data snippet from the highest scored pair of POI data snippets from the score maps. Note that the removal operation in step 708, when combined with a similar removal operation in step 714, will eventually result in the POI score map and the POI-cluster score map being emptied out (i.e., when all candidate POI data snippets have been included in clusters as described for FIG. 7), which amounts to the end of the initial generation of clusters (although the clusters may still be merged in a subsequent operation).

After removing the references to the POI data snippets, the electronic map source updates the POI-cluster (CLS) score map (step 710). For this operation, the electronic map source calculates a POI-cluster weight score between each POI data snippet awaiting clustering and the POI cluster. Generally, the POI-cluster weight score is a numeric or other value that indicates a likelihood of a POI data snippet and a POI cluster (or, rather, the POI data snippets within the POI cluster) including information associated with a same point of interest. For example, assuming that POI-cluster weight scores are numeric values between zero and one, a value of one for the POI-cluster weight score can represent an ideal match between the information in the POI data snippet and a POI cluster - and thus the highest likelihood that the POI data snippet and the POI cluster include information associated with the same point of interest. For instance, if the POI data snippet and the POI data snippets in the POI cluster can be very close in locations, have the same names, etc. In contrast, zero can represent the lowest likelihood of the POI data snippet and a POI cluster include information associated with the same point of interest, such as when all of the information in the POI data snippet and the POI data snippets in the POI cluster is different.

In some embodiments, calculating the POI-cluster weight score for the POI data snippet and a POI cluster includes inputting data from the POI data snippet and some or all of the POI data snippets in the POI cluster into one or more weight functions that return, as output(s), the POI-POI weight scores representing the likelihood that the pair of point of interest data snippets are referring to, associated with, and/or otherwise include information about a same point of interest. Each weight function includes a set of comparison, mathematical, logical, and/or other operations that are used for determining a weight score. For example, in some embodiments, a weight function takes, as input, specified data from each POI data snippet (e.g., a location of the point of interest, a name of the point of interest, open hours, and/or other specified data), performs a one or more operations on or involving the specified data (e.g., comparison, logical, etc.), and returns a weight score reflecting the similarity (or not) of the POI data snippets. In these embodiments, POI data snippets including matching specified data (e.g., very close point of interest locations, matching names, same open hours) are accorded a highest weight score by the weight function. On the other hand, pairs of POI data snippets having mismatching specified data are accorded relatively lower weight scores by the weight function, depending on the nature of the mismatches in the specified data. The POI-cluster weight score for the POI cluster and the POI data snippet is then determined based on the individual POI-POI weight scores of the POI data snippets in the POI cluster. For example, maximum or minimum POI-POI weight score for one or more of the POI data snippets in a POI cluster and a given POI data snippet can be used as the POI-cluster weight score. In some embodiments, for a given POI data snippet, the POI-cluster score is the highest POI-POI weight score between the given POI data snippet and any one of the POI data snippets in the POI cluster, assuming that the POI-POI weight score for all the POI data snippets in the POI cluster and the given POI data snippet are above a POI-cluster threshold value. In some embodiments, if any one POI-POI weight score between a given POI data snippet and a POI data snippet in the POI cluster is below the POI-cluster threshold value, the given POI data snippet is not accorded a POI-cluster score - or is accorded the lowest POI-POI score for the given POI data snippet and the POI data snippet within the POI cluster.

FIG. 9 presents a block diagram illustrating operations associated with generating a POI-cluster score map in accordance with some embodiments. For the example in FIG. 9, POI data snippet 900 and POI cluster 804 are used as examples. In addition, it is assumed that the weight function returns a POI-cluster weight score of 0.97 for POI data snippet 900 and POI cluster 804, indicating very good match between POI data snippet 900 and POI cluster 804. That is, given the similarity in the names and addresses in POI data snippets 400 and 402 in POI cluster 804 and POI data snippet 900, the weight function returns a POI-cluster weight score relatively close to the ideal weight score. In addition, although the additional POI data snippets are not shown in FIG. 9 for clarity, the weight function returns POI weight scores of 0.72, 0.91, and 0.86 for the pairings of POI cluster 804 and each of the additional POI data snippets.

Note that, in some embodiments, two weight scores may be calculated for the pairings of POI cluster 804 and POI data snippets 400 and 402 in POI cluster 804. That is, the electronic map source may calculate, using the at least one weight function, a POI-POI weight score for each POI data snippet in each POI cluster. Only one POI-POI weight score is used for the score map, however, such as using the above-described maximum POI-POI score for the POI cluster. For the example in FIG. 9, the single POI-cluster weight score used for POI cluster 804 and POI data snippet 900 is 0.97. In addition, in some embodiments, in order to avoid unnecessary computation, the electronic map source may avoid calculating remaining POI-POI weight scores upon finding that a POI-POI weight score for a given POI data snippet is below a threshold value used for determining whether POI data snippets are to be added to a POI cluster.

In some embodiments, during step 700, a copy of the POI score map is created and then retained during at least some of the operations shown in FIG. 7. The copy of the POI score map is kept as a record of the POI-POI weight scores between each pair of POI data snippets (or at least those POI-POI weight scores above the POI-POI threshold value). In these embodiments, instead of calculating POI-POI weight scores each time the POI-cluster weight score map is updated in step 710, the electronic map source can acquire the POI-POI weight scores from the copy of the POI-POI score map. That is, the POI-POI weight scores used for determining a POI-cluster weight score for a given POI data snippet and a POI cluster can be found via lookup(s) in the copy of the POI score map. In these embodiments, the copy of the POI score map is not reduced/does not have information removed (i.e., as the POI score map itself does in steps 708 and 714) and thus retains all POI-POI weight scores during the operations of FIG. 7. The copy of the POI score map can then be discarded when no longer needed - e.g., at operation 718 or another time.

As the POI-cluster weight scores (e.g., POI-cluster weight scores 912) are calculated for each pair of POI data snippet-cluster pairing, the electronic map source updates the POI-cluster score map so that the POI-cluster score map includes POI-cluster pairs arranged in a descending order of POI-cluster weight scores. For this operation, the electronic map source updates data in a data structure (e.g., a list, table, hash, etc.) in which the contents of the POI-cluster score map are stored. The electronic map source adds POI-cluster weight scores to the POI-cluster score map in descending order as shown in POI-cluster score map 802, which includes POI-cluster weight scores 906 in descending order (i.e., from a highest POI-cluster weight score to a lowest POI-cluster weight score). In some embodiments, for this operation, as each POI-cluster pair is added to POI-cluster score map 802, the electronic map source adds an identifier - cluster identifier (ID) 908 and POI data snippet identifier (ID) 910 - for each of the POI-cluster pairs to POI-cluster score map 802, along with the respective POI-cluster weight score 906. In some embodiments, POI-cluster pairs having a POI-cluster weight score below a POI-cluster threshold value - and thus having a lower-quality weight score indicating a poor match - are dropped/discarded and not added to POI-cluster score map 802. For the example in FIG. 9, it is assumed that the threshold is 0.80 and thus the POI-cluster weight score of 0.72 is too low to be included in POI-cluster score map 802 and is discarded.

Note that, for the example in FIG. 9, POI-cluster score map 802 is initially empty and there are no other POI-cluster weight scores in POI cluster score map 802. POI cluster weight scores 912 are therefore simply input into POI-cluster score map 802 in the descending order as described above. In some embodiments, however, upon generating one or more additional clusters (as described below), POI-cluster score map 802 is again updated. In this case, because there are one or more POI-cluster pairs in POI-cluster score map 802 (and POI-cluster score map 802 is therefore not empty), the new POI-cluster pairs are worked into the already-present descending order of POI-cluster score map 802. That is, the newly added POI-cluster pairs are added to POI-cluster score map in accordance with their POI-cluster weight scores relative to the existing POI-cluster weight scores already present in POI-cluster score map 802.

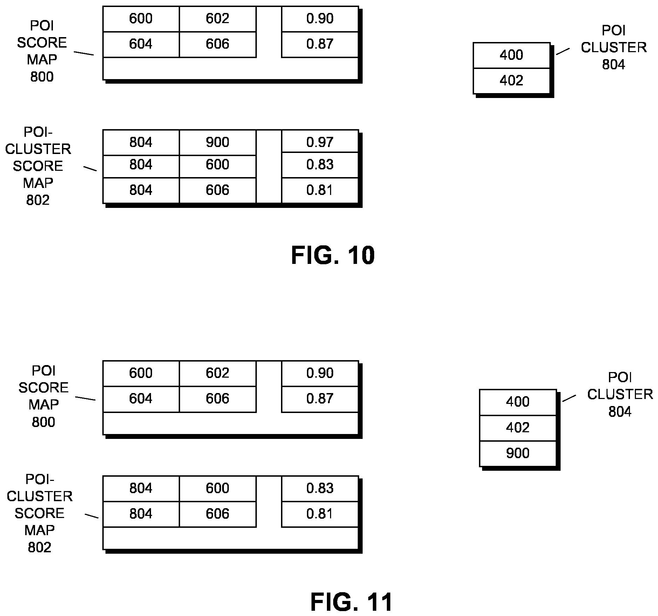

After updating the POI-cluster score map, POI score map 800 and POI-cluster score map 802 appear as shown in FIG. 10. FIG. 10 is a block diagram illustrating POI score map 800 and POI-cluster score map 802 in accordance with some embodiments. As can be seen in FIG. 10, and as was done in step 708, references to POI data snippets 400 and 402 have been removed from POI score map 800. Given this state of POI score map 800 and POI-cluster score map 802, the electronic map source again determines whether the POI score map and the POI-cluster map are both empty (step 702). Because neither of the POI score map or the POI-cluster score map are empty, the electronic map determines whether a weight score for the highest weight scored POI-cluster pair in the POI-cluster score map is equal to or higher than a weight score of the highest weight scored pair of POI data snippets in the POI score map (step 704). For this operation, the electronic map source compares the highest weight score from the POI score map to the highest weight score from the POI-cluster score map to determine which score map holds the highest weight score. Continuing the example from FIG. 10, given that the highest weight score in POI score map 800 is 0.90 and the highest weight score in the POI-cluster score map is 0.97, the electronic map source proceeds to step 712. That is, given that the weight score for a POI-cluster pair is higher, the electronic map source determines that a corresponding POI data snippet, POI data snippet 900, is to be added to an existing POI cluster, POI cluster 804. In this case, because POI data snippet 900 includes information associated with the same point of interest as POI data snippets 400 and 402 already present in POI cluster 804, clustering this POI-cluster pair results in a POI cluster that correctly includes POI data snippets with information about the same point of interest (Bill's Burgers and Beers restaurant).

The electronic map source next combines the highest weight scored POI data snippet-cluster pair from the POI-cluster score map (step 712). For this operation, the electronic map source adds, to POI cluster 804, POI data snippet 902. For this operation, the electronic map source updates an existing POI cluster, POI cluster 804, to include POI data snippet 900. Similarly to step 706 above, POI data snippet 900 may or may not be moved/clustered together with POI cluster 804 (e.g., in a memory of an electronic device used by the electronic map source for performing the operations of FIG. 7). In some embodiments, therefore, step 712 includes a record-keeping operation in which a data structure of POI cluster 804 is updated to include POI data snippet 900. After updating POI cluster 804, the electronic map source removes references to the POI data snippet from the highest scored POI-cluster pair from the POI score map, the POI-cluster score map, and the active list (step 714). Generally, for this operation, because POI data snippet 900 is added to POI cluster 804, POI data snippet 900 is no longer awaiting clustering (i.e., is no longer a candidate to be added to a cluster) and is therefore removed from the score maps (where the "score maps" include both the POI score map and the POI-cluster score map) and the active list. Note again that the removal operation in step 714, when combined with a similar removal operation in step 708, will eventually result in the POI score map and the POI-cluster score map being emptied out (i.e., when all candidate POI data snippets have been included in clusters as described for FIG. 7), which amounts to the end of the initial generation of clusters (although the clusters may still be merged in a subsequent operation). FIG. 11 presents a block diagram illustrating POI score map 800 and POI-cluster score map 802 in accordance with some embodiments. More specifically, FIG. 11 shows the state of POI score map 800, POI-cluster score map 802, and POI cluster 804 following step 714 as described above. As can be seen in FIG. 11, the reference to POI data snippet 900 has been removed from POI-cluster score map 802 and POI cluster 804 includes POI data snippet 900.

The above-described operations, i.e., some or all of the operations in the loop including operations 702-714, are performed a number of times until both the POI score map and the POI cluster score map are empty (step 702). That is, POI data snippets are either added to new POI clusters or existing POI clusters as described above until there are no remaining POI-cluster pairs in the POI-cluster score map or pairs of POI data snippets in the POI score map (due to the removal operations in steps 708 and 714). At this point, there may be one or more remaining POI data snippets awaiting clustering, but none of these one or more remaining POI data snippets had a POI-POI weight score or a POI-cluster weight score sufficiently high to be added to the POI score map and/or the POI-cluster score map. In other words, the information in the remaining POI data snippet was sufficiently different than any other POI data snippet that each of the remaining POI data snippets appears to represent its own point of interest. Although the score maps are empty, the remaining POI data snippets are listed in the active list. The active list, recall, has had clustered POI data snippets removed in steps 708 and 714, but any remaining (i.e., as yet un-clustered) POI data snippets will remain present in the active list. After determining that the score maps are empty, therefore, the electronic map source determines whether the active list is also empty (step 716). If and when the active list is empty (step 716), the electronic map source is done generating POI clusters and proceeds to an operation for merging the POI clusters (step 718).

When the active list is not empty (step 716), there is at least one POI data snippet awaiting clustering. The electronic map source therefore removes a next POI data snippet from the active list (step 720). The electronic map source then adds the next POI data snippet from the active list to a POI cluster alone (step 722). The electronic map source repeats operations 716 and 720-722 until the active list is empty (step 716), at which point the electronic map source proceeds to the operation for merging the POI clusters (step 718).

Note that the operations and elements shown in FIGs. 8-11 are presented as a general example of operations performed by some embodiments. The operations performed by other embodiments include different operations, operations that are performed in a different order, and/or operations that are performed by different entities or functional blocks. For example, although the POI-cluster list is described as being created empty, the POI-cluster list may not be created until the first cluster exists.

### Clustering Clusters

In some embodiments, after generating the clusters using process described in FIG. 7, the electronic map source combines/clusters together the clusters themselves. For this operation, the electronic map source calculates, using the at least one weight function, a cluster-cluster weight score for cluster-cluster pairs including each pair of POI clusters from among the generated POI clusters. The electronic map source then generates a cluster-cluster score map including the cluster-cluster pairs having cluster-cluster scores above a threshold value arranged in a descending order of corresponding cluster-cluster weight scores. The electronic map source then proceeds through the cluster-cluster score map, combining the clusters in the cluster-cluster score map. That is, the electronic map source takes a highest-scored/first cluster-cluster pair from the cluster-cluster score map, combines the clusters together into a single combined cluster, and then removes the cluster-cluster pair and references to the clusters therein from the cluster-cluster score map. The electronic map source does this until the cluster-cluster score map is empty - and thus the cluster-cluster pairs having a cluster-cluster weight score above the threshold value are combined. In some embodiments, the electronic device attempts multiple times to cluster clusters, e.g., until a newly generated cluster-cluster score map has no cluster-cluster pairs (i.e., all cluster-cluster weight scores are below the threshold).

### Adding Point of Interest Information to an Electronic Map

In some embodiments, after generating the clusters and combining/clustering the clusters as described above, the electronic map source has a set of clusters, each cluster therein including one or more point of interest data snippets having information about a same point of interest. Although the point of interest data snippets in each POI cluster have been determined - via the weight functions used for generating each of the score maps - to be likely to include information about a same point of interest, the information in each point of interest data snippet may include different types of information, errors, etc. The electronic map source therefore processes the point of interest data snippets in each POI cluster to generate aggregate point of interest information for each data cluster. For example, the processing can include generating or selecting a full name for the point of interest in a given cluster, combining information such as hours of operation, type, etc., and/or otherwise readying the information in the POI data snippets in each cluster to be added to the electronic map.

In some embodiments, the operation of adding point of interest information to the electronic map includes storing, in one or more electronic map files, data based on the POI clusters (e.g., the above-described aggregate point of interest information for each cluster), the data representing a new POI in the electronic map or an update to an existing POI in the electronic map. For example, when a new electronic map is being generated, the electronic map source can add corresponding point of interest information to the electronic map (i.e., store data identifying the point of interest among other data in one or more electronic map files comprising the electronic map), thereby newly adding the point of interest to the electronic map. As another example, when an existing electronic map is being updated, the electronic map source can either add corresponding point of interest information to the electronic map or update existing point of interest information in the electronic map (i.e., store data identifying the point of interest among other data in one or more electronic map files comprising the electronic map), thereby newly adding or updating the point of interest to the existing electronic map. The electronic map source can then provide the map itself to electronic map consumers - i.e., provide the electronic map files including the point of interest information to the electronic map consumers - or provide information (e.g., addresses, coordinates, listings, etc. for points of interest) based on the electronic map to the electronic map consumers.

In some embodiments, at least one electronic device (e.g., electronic device 300) uses code and/or data stored on a non-transitory computer-readable storage medium to perform some or all of the operations herein described. More specifically, the at least one electronic device reads code and/or data from the computer-readable storage medium and executes the code and/or uses the data when performing the described operations. A computer-readable storage medium can be any device, medium, or combination thereof that stores code and/or data for use by an electronic device. For example, the computer-readable storage medium can include, but is not limited to, volatile and/or non-volatile memory, including flash memory, random access memory (e.g., eDRAM, RAM, SRAM, DRAM, DDR4 SDRAM, etc.), non-volatile RAM (e.g., phase change memory, ferroelectric random access memory, spin-transfer torque random access memory, magnetoresistive random access memory, etc.), read-only memory (ROM), and/or magnetic or optical storage mediums (e.g., disk drives, magnetic tape, CDs, DVDs, etc.).

In some embodiments, one or more hardware modules perform the operations herein described. For example, the hardware modules can include, but are not limited to, one or more processors/cores/central processing units (CPUs), application-specific integrated circuit (ASIC) chips, neural network processors or accelerators, field-programmable gate arrays

(FPGAs), decompression engines, compute units, embedded processors, graphics processors (GPUs)/graphics cores, pipelines, accelerated processing units (APUs), functional blocks, controllers, accelerators, and/or other programmable-logic devices. When such hardware modules are activated, the hardware modules perform some or all of the operations. In some embodiments, the hardware modules perform the operations "in hardware" using dedicated or general purpose circuitry without executing program code instructions. In some embodiments, the hardware modules include one or more general purpose circuits that are configured by executing instructions (program code, firmware, etc.) to perform the operations.

The expression "et cetera" or "etc." as used herein is intended to present an and/or case, i.e., the equivalent of "at least one of" the elements in a list with which the etc. is associated. For example, in the statement "the electronic device performs a first operation, a second operation, etc.," the electronic device performs at least one of the first operation, the second operation, and other operations. In addition, the elements in a list associated with an etc. are merely examples from among a set of examples - and at least some of the examples may not appear in some embodiments.

The foregoing descriptions of embodiments have been presented only for purposes of illustration and description. They are not intended to be exhaustive or to limit the embodiments to the forms disclosed. Accordingly, many modifications and variations will be apparent to practitioners skilled in the art. Additionally, the above disclosure is not intended to limit the embodiments. The scope of the embodiments is defined by the appended claims.

## Claims

1. A computer-implemented method for handling point of interest, POI, information for an electronic map, the method comprising:
acquiring a plurality of POI data snippets, each POI data snippet including respective information about a respective POI;
calculating, using at least one weight function, a POI-POI weight score for each pair of POI data snippets from among the plurality of POI data snippets;
generating a POI score map including the pairs of POI data snippets arranged in a descending order of corresponding POI-POI weight scores, the POI score map including only pairs of POI data snippets having POI-POI weight scores above a POI-POI threshold value;
clustering the POI data snippets into one or more POI clusters, the clustering including controlling which pairs of POI data snippets are clustered into POI clusters based on the order of the pairs of POI data snippets in the POI score map; and
updating POI information in the electronic map data based on information from the POI clusters.

2. The method of claim 1, wherein clustering the POI data snippets into the one or more POI clusters includes:
responsive to determining that the POI score map includes at least one pair of POI data snippets:
combining a determined pair of POI data snippets from the POI score map into a POI cluster, the determined pair of POI data snippets being a highest pair of POI data snippets in the order of the pairs of POI data snippets in the POI score map; and
removing references to the POI data snippets from the determined pair of POI data snippets from the POI score map and an active list, the active list including a listing of POI data snippets from the plurality of POI data snippets that are awaiting clustering.

3. The method of claim 2, wherein removing the references to the POI data snippets from the determined pair of POI data snippets includes:
removing, from the POI score map, any pairs of POI data snippets that include either of the POI data snippets from the determined pair of POI data snippets; and
removing, from the active list, both POI data snippets from the determined pair of POI data snippets.

4. The method of claim 2 or claim 3, further comprising:
generating a POI-cluster score map, the generating including:
calculating, using the at least one weight function, a POI-cluster weight score for POI-cluster pairs including each POI cluster and each POI data snippet in the active list; and
generating a POI-cluster score map including the POI-cluster pairs arranged in a descending order of corresponding POI-cluster weight scores, the POI-cluster score map including only POI-cluster pairs having POI-cluster weight scores above a POI-cluster threshold value.

5. The method of claim 4, wherein clustering the POI data snippets into the one or more POI clusters includes:
using the POI score map and the POI-cluster score map to generate new POI clusters or add POI data snippets to existing POI clusters, the using including:
until both the POI-cluster score map and the POI score map are empty:
selecting, based on POI-POI weight scores in the POI score map and POI-cluster weight scores in the POI-cluster score map, a given pair of POI data snippets to be combined into a POI cluster or a POI-cluster pair to be combined;
removing, from the active list, the POI score map, and/or the POI-cluster score map, references to the given pair of POI data snippets or the POI data snippet from the POI-cluster pair; and
returning to the selecting.

6. The method of claim 5, wherein selecting the given pair of POI data snippets to be combined into a POI cluster or a POI-cluster pair to be combined includes:
when a POI-cluster weight score of a highest POI-cluster pair in the order of the POI-cluster pairs in the POI-cluster score map is equal to or exceeds a highest POI-POI weight score of a pair of POI data snippets in the order of the pairs of POI data snippets in the POI score map, adding the POI data snippet from the highest POI-cluster pair to the POI cluster from the highest POI-cluster pair; or
when a POI-POI weight score of a highest pair of POI data snippets in the order of the pairs of POI data snippets in the POI score map exceeds a POI-cluster weight score of a highest POI-cluster pair in the order of the pairs of POI-cluster pairs in the POI-cluster score map, generating a new POI cluster including POI data snippets from the highest pair of POI data snippets.

7. The method of claim 5 or 6, wherein removing the references to the given pair of POI data snippets or the POI data snippet from the POI-cluster pair includes:
when combining a given pair of POI data snippets into a POI cluster, removing, from the active list, the POI score map, and/or the POI-cluster score map, each POI data snippet from the given pair of POI data snippets and pairings involving each POI data snippet in the given pair of POI data snippets; and
when combining a POI-cluster pair, removing, from the active list, the POI score map, and/or the POI-cluster score map, a POI data snippet from the POI-cluster pair and pairings involving that POI data snippet.

8. The method of any one of claims 5 to 7, further comprising:
when both the POI-cluster score map and the POI score map are empty, for each remaining POI data snippet in the active list, creating a respective POI cluster including only that POI data snippet.

9. The method of any one of claims 4 to 8, further comprising, when generating the POI score map and/or the POI-cluster score map, arranging the pairs of POI data snippets and/or the POI-cluster pairs into the descending order includes:
using one or more ranking values and/or other identifiers for resolving ties in the POI-POI weight scores and/or the POI-cluster weight scores.

10. The method of any one of the preceding claims, further comprising:
after clustering the POI data snippets into the one or more POI clusters, clustering the one or more POI clusters together, the clustering including:
calculating, using the at least one weight function, a cluster-cluster weight score for cluster-cluster pairs including each pair of POI clusters from among the one or more POI clusters;
generating a cluster-cluster score map including the cluster-cluster pairs arranged in a descending order of corresponding cluster-cluster weight scores, the cluster-cluster score map including only cluster-cluster pairs having cluster-cluster weight scores above a cluster-cluster threshold value; and
combine pairs of POI clusters together based on the order of the corresponding cluster-cluster weight scores in the cluster-cluster score map.

11. The method of any one of the preceding claims, wherein receiving the POI data snippets includes:
acquiring, from one or more POI data sources, the POI data snippets and/or information from which the POI data snippets are extracted, the data sources including some or all of web sites, map sources, user reviews, text describing POIs, and POI data providers.

12. The method of any one of the preceding claims, wherein the respective information about the POI includes a name and a location for the POI.

13. The method of any one of the preceding claims, wherein updating the POI information in the electronic map data includes:
selectively combining information from some or all of the point of interest data snippets in each POI cluster into aggregate POI information for a respective POI; and
updating point of interest records within the electronic map data based on the aggregate POI information.

14. The method of any one of the preceding claims,
wherein the method further comprises:
presenting, based on the electronic map data including the POI information, information about one or more POIs to a user;
and/or
wherein updating the POI information in the electronic map data includes storing, in one or more electronic map files, data based on the POI clusters, the data representing a new POI in the electronic map or an update to an existing POI in the electronic map.

15. An electronic device that handles point of interest, POI, information for electronic map data, the electronic device comprising:
a memory; and
at least one processor, the at least one processor configured to perform the method of any of the preceding claims.
